# EUROPEAN PATENT SPECIFICATION

(11) **EP 4 216 324 B1**
(45) Date of publication and mention of the grant of the patent: **25.11.2026**
(21) Application number: 21869478.4
(22) Date of filing: 21.09.2021
(51) Int. Cl.: H01M 10/04, H01M 50/533, H01M 50/538, H01M 4/13, H01M 4/66, H01M 4/70, H01M 10/052, H01M 10/0587, H01M 50/534, H01M 50/536

(54) **ELECTRICITY STORAGE DEVICE, AND METHOD FOR MANUFACTURING SAME**
STROMSPEICHERVORRICHTUNG UND VERFAHREN ZUR HERSTELLUNG DAVON
DISPOSITIF DE STOCKAGE D'ÉLECTRICITÉ, ET PROCÉDÉ DE FABRICATION DE CELUI-CI

(30) Priority: 21.09.2020 US 202063081146 P
(43) Date of publication of application: 26.07.2023
(73) Proprietor: Panasonic Intellectual Property Management Co., Ltd., Osaka-shi, Osaka 540-6207 (JP)
(72) Inventor: GESHI, Shinya, Osaka-shi, Osaka 540-6207 (JP); SAKAMOTO, Shinichi, Osaka-shi, Osaka 540-6207 (JP); SHIMIZU, Kazumichi, Osaka-shi, Osaka 540-6207 (JP); KOZUKI, Kiyomi, Osaka-shi, Osaka 540-6207 (JP); KOHIRA, Kazutoshi, Osaka-shi, Osaka 540-6207 (JP)
(74) Representative: Novagraaf International SA
(86) International application number: PCT/JP2021/034617
(87) International publication number: WO 2022/059796

(56) References cited:
- WO-A1-2020/073887
- JP-A- 2008 066 048
- JP-A- 2008 066 048
- JP-A- 2011 527 488
- KR-A- 20150 037 399
- US-B1- 6 479 763

## Description

### TECHNICAL FIELD

The present disclosure relates to a power storage device and a production method thereof.

### BACKGROUND ART

The document JP2008066048 discloses a wound lithium-ion secondary battery in which uncoated edge portions of the positive and negative electrodes are electrically connected to the sealing body and battery case via elastic porous metal current collectors. Patent Literature 1 has proposed a cylindrical secondary battery as an example of the power storage device, including an electrode group in which a positive electrode and a negative electrode are wound around a cylindrical axis core with a separator interposed therebetween; a battery can having an opening portion at an upper portion thereof, in which the electrode group is accommodated and a liquid electrolyte is injected; a battery lid disposed at an upper portion of the battery can; and a negative electrode current collecting member disposed between the can bottom of the battery can and a lower end portion of the axis core, to which a negative electrode tab of the negative electrode is connected and joined to the battery can; wherein the negative electrode current collecting member is formed with a clad material integrally formed with a first metal and a second metal by diffusion bonding to the first metal, the first metal being connected to the negative electrode, and the second metal being joined to the can bottom of the battery can, the first metal is formed with copper or a copper alloy, the second metal is formed with nickel, the negative electrode current collecting member is a ring having an outer peripheral side wall at an outer peripheral side, the negative electrode current collecting member is formed with a cylindrical depressed portion to which a distal end portion side of the axis core is inserted into the center portion, at the cylindrical depressed portion, the second metal is joined to a can bottom of the battery can, and at the outer peripheral side wall of the negative electrode current collecting member, the negative electrode tab is joined to the first metal by ultrasonic welding.

### Citation List

### Patent Document

Patent Literature 1: WO 2013/024774

### SUMMARY OF THE INVENTION

### PROBLEM TO BE SOLVED BY THE INVENTION

In the case of Patent Literature 1, an electric current can only be taken out from a portion where the negative electrode tab of the negative electrode is connected, and therefore current collecting efficiency is poor and contact resistance of the battery is high.

Meanwhile, for a current collecting structure to obtain a high output, a so-called end face current collecting structure has been examined. The end face current collecting structure is generally a structure in which an exposed portion of a current collector of an electrode is projected from an end portion of the wound body and welded to a current collecting plate.

However, because the current collector is thin, the wound current collector has to be deformed, collected, and welded to the current collecting plate. Deforming a thin current collector causes a great load to the current collector, which may be a factor for a current collector fracture. Furthermore, to deform a wound current collector, the exposed portion of the current collector has to be partially cut out, or processed to give slits.

### MEANS FOR SOLVING THE PROBLEM

In a first aspect, the present invention relates to a power storage device including: a first electrode having an elongated sheet first current collector, and a first active material layer carried on the first current collector, an elongated sheet second electrode, a separator interposed between the first electrode and the second electrode, a non-aqueous electrolyte, and a first current collecting portion electrically connected to the first current collector, wherein the first electrode, the second electrode, and the separator form a columnar wound body, one end portion along a longitudinal direction of the first current collector is a first exposed portion not having the first active material layer and projected from one end face of the wound body, the first current collecting portion has a porous metal portion, and one or more projected portions that are pressed into the porous metal portion, and the porous metal portion abuts on the first exposed portion. The projected portion has a distal end of a hook, and the first exposed portion is folded at least once.

In a second aspect, the present invention relates to a method for producing a power storage device, the method including the steps of: preparing a first electrode having an elongated sheet first current collector and a first active material layer carried on the first current collector, wherein one end portion along the longitudinal direction of the first current collector is a first exposed portion not having the first active material layer, preparing an elongated sheet second electrode, preparing a separator to be interposed between the first electrode and the second electrode, forming a columnar wound body from the first electrode, the second electrode, and the separator such that the first exposed portion is projected from one end face of the wound body, applying an electrically conductive paste including metal particles to the first exposed portion, solidifying or curing the electrically conductive paste to form a porous metal portion filling a gap of the first exposed portion, and pressing one or more projected portions into the porous metal portion to form a first current collecting portion. Before the electrically conductive paste is applied to the one end portion of the first electrode, the one end portion is folded at least once, and the projected portion has a distal end of a hook.

### Effects of the Invention

The present disclosure allows for production of a power storage device with a low contact resistance, a small load on the current collector, and excellent reliability. While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a vertical cross sectional view illustrating a configuration of an example of a power storage device of the embodiment of the present disclosure.
[FIG. 2] FIG. 2 is a plan view illustrating a configuration of a first electrode.
[FIG. 3] FIG. 3 shows a plan view (a) and a vertical cross sectional view (b) illustrating a configuration of another first electrode.
[FIG. 4] FIG. 4 is a plan view illustrating a configuration of a second electrode.
[FIG. 5] FIG. 5 is a perspective view illustrating an appearance of a wound body included in a power storage device of the embodiment of the present disclosure.
[FIG. 6] FIG. 6 is a step diagram illustrating applying an electrically conductive paste to a first exposed portion of a first electrode and winding the first electrode and second electrode with a separator interposed therebetween.
[FIG. 7] FIG. 7 shows variations of the application pattern of the electrically conductive paste applied to the first exposed portion of a first electrode.
[FIG. 8] FIG. 8 is a step diagram illustrating pressing in a projected portion of a first current collecting plate to a porous metal portion charged in a gap of a first exposed portion, and thereafter, the first current collecting plate is welded to a bottom portion of a bottomed case.
[FIG. 9] FIG. 9 is a cross sectional view illustrating an example of a first current collecting plate having a through hole.
[FIG. 10] FIG. 10 is a cross sectional view illustrating an example of a projected portion.
[FIG. 11] FIG. 11 is a diagram illustrating projected portions that are projected from a bottom portion of a bottomed case.
[FIG. 12] FIG. 12 is a step diagram illustrating applying an electrically conductive paste to a first current collecting plate from which a projected portion is projected, and then disposing a first current collecting plate to a first end face of a wound body.
[FIG. 13] FIG. 13 is a perspective view illustrating a wound body having a first exposed portion that is finely split with slits.

### DESCRIPTION OF THE EMBODIMENTS

Embodiments of the present disclosure will be described below. Hereinafter, embodiments of the present disclosure will be described in more detail based on examples, but the present invention is not limited to the examples described below. The scope of the present invention is defined by the appended claims. In the following description, specific numerical values and materials may be exemplified, but other numerical values and other materials may be used as long as the effect of the present disclosure is obtained.

### <Power storage device>

A power storage device of the present disclosure has an elongated sheet first electrode, an elongated sheet second electrode, a separator interposed between the first electrode and second electrode, and a non-aqueous electrolyte or liquid electrolyte. The first electrode and second electrode are wound with the separator interposed therebetween, and forms a columnar wound body.

The first electrode has an elongated sheet first current collector, and a first active material layer carried on the first current collector. One end portion along the longitudinal direction (one end portion in the width direction) of the first current collector is a first exposed portion not having the first active material layer. The first exposed portion is projected from one end face (hereinafter, also referred to as "first end face") of the wound body.

The power storage device of the present disclosure has a first current collecting portion electrically connected to the first current collector. The first current collecting portion has a porous metal portion, and one or more projected portions that are pressed into the porous metal portion. The first current collecting portion forms a path for an electric current drawn out from the first current collector to an external terminal. The contact resistance is small with a larger first exposed portion area electrically connected with the first current collecting portion.

The porous metal portion abuts the first exposed portion. It can be said that the porous metal portion is disposed at a gap of the first exposed portion. The gap of the first exposed portion means a plurality of cyclic gaps formed between the first exposed portions when the first electrode is wound into a swirl. The porous metal portion is disposed so as to, for example, be charged into the gap of the originally present first exposed portion, and therefore the first exposed portion itself is not excessively loaded from the porous metal portion. Also, the contact area between the porous metal portion filled in the gap and the first exposed portion is sufficiently large. Therefore, the contact resistance at the interface between the porous metal portion and the first exposed portion is small.

The one or more projected portions pressed into the porous metal portion are entered into the porous metal portion, and therefore can bond strongly with the porous metal portion. Such a strong bond can ensure current collecting reliability. Meanwhile, at the porous metal portion, only the portion where the projected portions are pressed in go through plastic deformation selectively. Therefore, compared with the configuration in which the current collecting plate is pressed against the first exposed portion and the current collecting plate and the first exposed portion are welded, the load on the first exposed portion (that is, the first current collector) can be small. Thus, excellent reliability can be maintained for a long time. The first exposed portion to which the porous metal portion abuts may be welded and joined to a current collecting plate not having projections. This configuration also may improve rigidity compared with conventional first exposed portions.

The porous metal portion is formed from an electrically conductive paste containing metal particles. The electrically conductive paste is applied so as to cover at least a portion of a first end face of the wound body. The electrically conductive paste has flowability, and therefore can be applied with no great load to the first exposed portion. In this case, the porous metal portion is configured with an aggregation of a plurality of metal particles, that is, a solidified product or cured product of the electrically conductive paste.

The porous metal portion formed from the electrically conductive paste (solidified product or cured product of the electrically conductive paste) is configured with a plurality of metal particles, and has many internal gaps, which makes it easier to go through plastic deformation. Thus, the load to the first exposed portion (that is, the first current collector) when pressing in the projected portion becomes even smaller.

The electrically conductive paste may include, other than the metal particles, an organic component such as a solvent, resin, etc. When the electrically conductive paste contains a nonvolatile organic component, the porous metal portion also may contain an organic component.

Examples of the electrically conductive paste containing a volatile solvent preferably include an electrically conductive paste that solidifies by volatilizing the solvent. In this case, a large portion of the porous metal portion (e.g., 80 mass% or more) is configured with metal particles. Examples of the electrically conductive paste containing resin preferably include an electrically conductive paste containing a curable resin. In this case, a strong porous metal portion can be formed by curing the curable resin. The curable resin may be a thermosetting resin.

The metal particles may have an average particle size (median diameter) in a volume-based particle size distribution of 0.1 µm or more and 10 µm or less. A plurality of types of metal particles having different average particle sizes may be mixed. The types of metal forming the metal particles are suitably selected in accordance with the types of the power storage device, polarity of the first electrode, materials of the first current collector, etc.

For the thermosetting resin, a resin composition of epoxy resin as a main component is preferable, without limitation.

The porous metal portion has a thickness of preferably smaller than the first exposed portion width in a transverse direction (width direction) of the first current collector, and is 10% or more and less than 100% of the first exposed portion width. The porous metal portion thickness is an average value of the measured values at any 10 points.

The projected portion electrically connected to the external terminal (hereinafter, referred to as a first terminal) of the first electrode will suffice. For example, the projected portion may be projected from a first current collecting plate electrically connected to the first terminal. The first current collecting plate is generally a plate.

When the projected portion is projected from the first current collecting plate, the projected portion may have a through hole penetrating the first current collecting plate. In this case, the non-aqueous electrolyte or liquid electrolyte may pass through the through hole. For example, by making a plurality of pierced holes to the plate metal portion material, the through holes and projected portions upright at the through hole rim may be formed simultaneously.

The projected portion may also be projected from the bottom portion of a bottomed case. The bottomed case is a case accommodating at least a wound body (that is, the first electrode, second electrode, and separator) and non-aqueous electrolyte or liquid electrolyte. In this case, the bottom portion of a bottomed case also serves as the first current collecting plate, and a separate first current collecting plate is not necessary. Therefore, it is advantageous in reduction in production costs and improvement in the battery capacity.

The shape of the projected portion is a sharply pointed distal end of a hook. The hook widely includes a shape with its distal end having an engaging portion, and a shape with its distal end having a bending portion. The engaging portion means a portion engages the porous metal portion when the projected portion pressed into the porous metal portion is pulled out. The engaging portion is projected to a direction different from the direction of the projection of the projected portion.

The projected portion may be one, but preferably a plurality of the projected portions (e.g., 3 or more) are present. The plurality of projected portions are preferably disposed to be scattered as much as possible.

The projected portion may have a height of the thickness of the porous metal portion or less, or may be 20% or less of the porous metal portion thickness. The projected portion may have a height of, for example, 50 µm or more and 500 µm or less. Here, the projected portion height means an average value of measured maxim heights of all the projected portions.

The first exposed portion is folded at least once. The thickness of the folded portion formed by the folding is about twice the thickness before folding, and the contact area with the electrically conductive paste of the folded portion is also about twice when an inner face of the folded portion is included. Therefore, the electrically conductive paste tends to be attached to the first exposed portion more, and the connection state between the porous metal portion and first exposed portion can be made even stronger.

At least a portion of the first exposed portion may be finely split with a plurality of slits extending in a transverse direction (width direction) of the first current collector. In this case, the first exposed portion is finely split into a plurality of strips and is like a brush projected from the first end face. As a result, the contact area between the electrically conductive paste and first exposed portion can be increased largely.

The porous metal portion formed at the first exposed portion may be formed intermittently in the winding direction of the first exposed portion. This configuration allows the liquid electrolyte (non-aqueous electrolyte) to enter easily from the gap between adjacent porous metal portions, among the plurality of porous metal portions arranged in the winding direction. Therefore, the wound body can be easily soaked in the liquid electrolyte. Also, compared with a porous metal portion extending continuously in the winding direction, the stress caused by bending of the porous metal portion when winding can be reduced.

The plurality of porous metal portions formed intermittently with a predetermined space provided therebetween may be arranged to be overlapped with each other in the radial direction of the wound body, when the end face of the wound body is seen from the winding axis direction. This configuration allows for increase in the joined area between the end face of the wound body and the current collecting plate when a welding mark is rolled out in the radial direction upon joining the end face and the current collecting plate. Furthermore, the plurality of porous metal portions increase the heat capacity of the end face, and therefore damages due to heat generated inside the wound body from the end face when welding can be decreased.

### <Method for producing power storage device>

A method for producing a power storage device of the present disclosure includes the steps of: (i) preparing a first electrode, (ii) preparing a second electrode, (iii) preparing a separator to be interposed between the first electrode and the second electrode, and (iv) forming a columnar wound body from the first electrode, second electrode, and separator such that the first exposed portion is projected from one end face (first end face) of the wound body, (v) applying an electrically conductive paste including metal particles to the first exposed portion, solidifying or curing the electrically conductive paste to form a porous metal portion filling a gap of the first exposed portion, and (vi) pressing one or more projected portions into the porous metal portion to form a first current collecting portion.

The first electrode has an elongated sheet first current collector and a first active material layer carried on the first current collector. One end portion along the longitudinal direction of the first current collector is a first exposed portion not having the first active material layer.

The step of applying the electrically conductive paste to the first exposed portion may be carried out when the wound body is formed. For example, while applying the electrically conductive paste to the first exposed portion of the first electrode before being wound, the first electrode and the second electrode may be wound with the separator interposed therebetween.

In this manner, along with the application of the electrically conductive paste to the first exposed portion, winding of the first electrode and the second electrode with the separator interposed therebetween may be carried out. In this case, an application device for the electrically conductive paste such as a dispenser may be additionally included in a device for forming a conventional wound body. No significant changes in the production process or significant extension of required time is caused. Furthermore, before winding, the electrically conductive paste may be applied to the first exposed portion.

Before applying the electrically conductive paste to the first exposed portion of the first electrode, the first exposed portion may be folded at least once. In this manner, by incorporating the folding of the first exposed portion and the application of the electrically conductive paste to the first exposed portion into the winding process, the wound body can be formed efficiently. The device for folding the first exposed portion may be additionally included in a previous stage of the application device for the electrically conductive paste. The solidifying or curing of the electrically conductive paste may be carried out before or after winding of the first exposed portion to which the electrically conductive paste is applied.

Meanwhile, after forming the wound body, the application of the electrically conductive paste to the first exposed portion may be performed. Specifically, a first current collecting plate having a projected portion is prepared, and an electrically conductive paste is applied to the face where the projected portion of the first current collecting plate is projected to form a coating. Next, the first current collecting plate is disposed to the first end face of the wound body through the coating. At that time, the electrically conductive paste enters into the gap of the first exposed portion, and the projected portion is pressed into the electrically conductive paste (or embedded). Afterwards, by solidifying or curing the electrically conductive paste, the porous metal portion and projected portions pressed into the porous metal portion can be formed.

As described above, the step of forming the first current collecting portion by pressing the one or more projected portions into the porous metal portion may be performed before or after solidifying or curing of the electrically conductive paste. The formed porous metal portion has no flowability, but has flexibility that can go through plastic deformation. Thus, the projected portions can be pressed in without giving an excessive load to the first exposed portion.

The method described is merely an example, but with at least the above-described method, intricate processes of deforming the first exposed portion is not particularly necessary, and therefore the first current collector may not go through fracture easily, and a highly reliable battery can be easily obtained.

The second electrode may have an elongated sheet second current collector and a second active material layer carried on the second current collector. One end portion along the longitudinal direction of the second current collector (one end portion in the width direction) is a second exposed portion not having the second active material layer, and the second exposed portion may be projected from the other end face of the wound body. A second current collecting portion having the same configuration as that of the first current collecting portion may be formed at the other end face of the wound body (end face at an opposite side of the first end face, hereinafter also referred to as "second end face").

However, the second current collecting portion may have a configuration other than the above-described configuration having the porous metal portion and projected portion. The second current collecting portion may have a lead tab extending from the second exposed portion. The lead tab may be cut out integrally with the second exposed portion and second current collector from a metal sheet, or a separately prepared lead tab may be connected to the second exposed portion. The second current collecting portion electrically connected to the external terminal of the second electrode (hereinafter, referred to as second terminal) will suffice. The second current collecting portion may have a second current collecting plate of a plate electrically connected to the second exposed portion.

The other end portion along the longitudinal direction of the first current collector may further be a third exposed portion not having the first active material layer, and the other end portion along the longitudinal direction of the second current collector may further be a fourth exposed portion not having the second active material layer. In this case, the third exposed portion and the fourth exposed portion are generally not projected from the end face of the wound body, and generally covered and protected with an insulating member.

A power storage device of the present disclosure is suitable for a configuration of, for example, a non-aqueous electrolyte secondary battery, alkaline storage battery, capacitor, etc., and particularly contributes to achieving a high output of a non-aqueous electrolyte battery. The non-aqueous electrolyte battery includes a lithium ion secondary battery, solid-state battery, etc. In this case, one of the first electrode and second electrode is a positive electrode, and the other is a negative electrode. Furthermore, one of the first current collector and second current collector is, for example, a positive electrode current collector formed with aluminum or aluminum alloy, and the other is a negative electrode current collector formed with, for example, copper or copper alloy.

In the following, a lithium ion secondary battery as an example of a power storage device of this embodiment is described in detail with reference to the drawings.

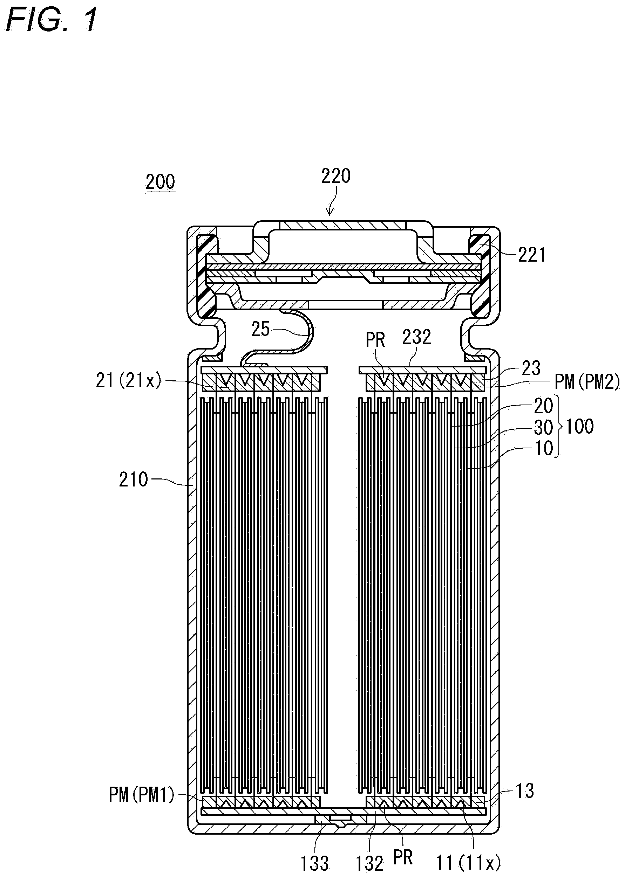

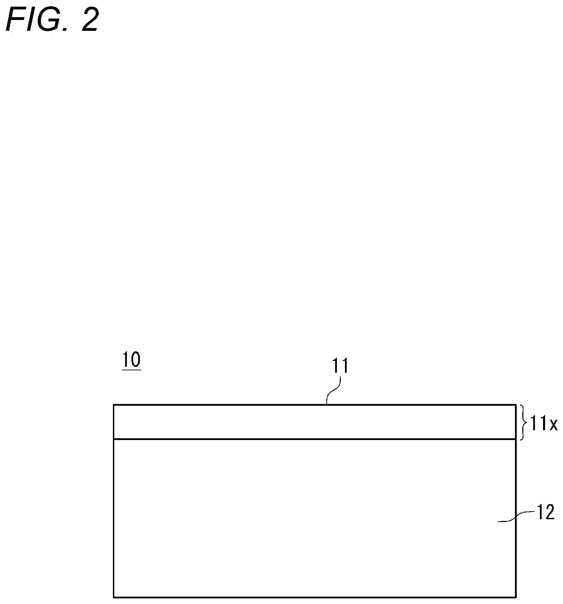

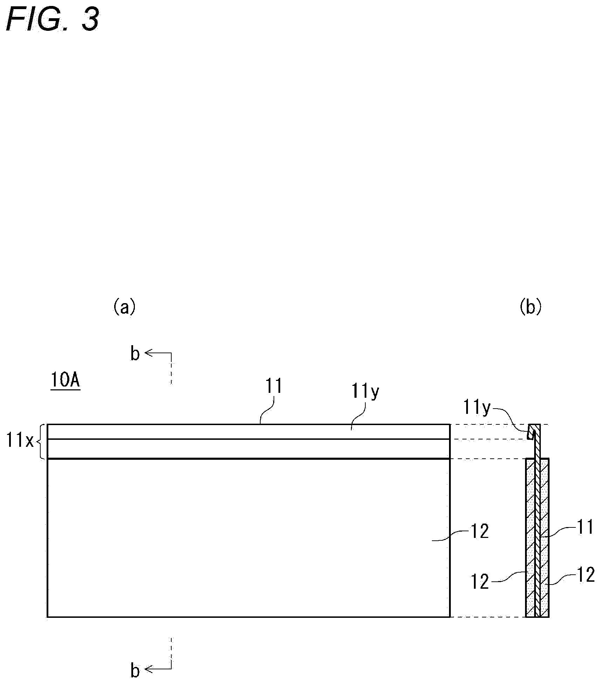

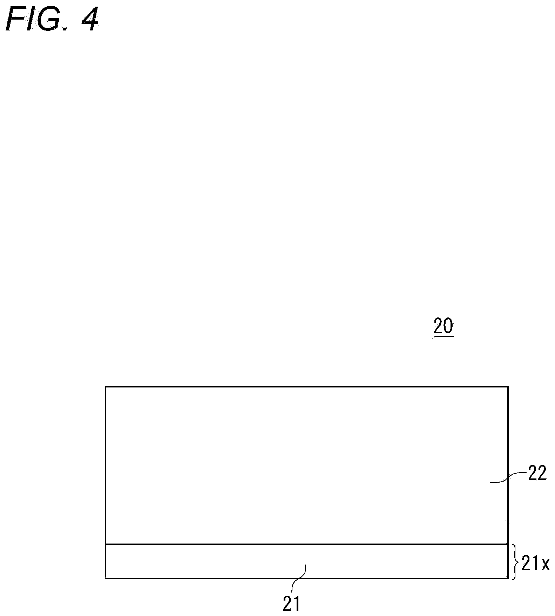

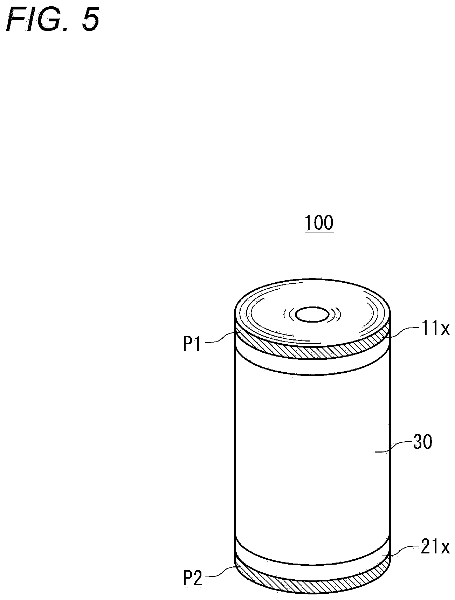

FIG. 1 is a vertical cross sectional view of illustrating a configuration of a battery (lithium ion secondary battery) as an example of a power storage device of the embodiment of the present disclosure. FIG. 2 is a plan view illustrating a configuration of a first electrode 10, i.e., one of a positive electrode and negative electrode. FIG. 3 is a plan view illustrating a configuration of another first electrode 10A. FIG. 4 is a plan view illustrating a configuration of a negative electrode 20, i.e., the other of a positive electrode and negative electrode. FIG. 5 is a perspective view illustrating an appearance of a wound body 100 of this embodiment.

A battery 200 includes a columnar wound body 100, a non-aqueous electrolyte (not shown), a metal-made bottomed case 210 accommodating the wound body 100 and non-aqueous electrolyte, and a sealing plate 220 that seals an opening of a case 210. A gasket 221 is disposed at the peripheral edge portion of the sealing plate 220, and by crimping the opening end of the case 210 to the gasket 221, the inside of the case 210 is sealed. The wound body 100 is formed by winding the elongated sheet first electrode 10 and elongated sheet second electrode 20 with an elongated sheet separator 30 interposed therebetween.

The first electrode 10 has, as shown in FIG. 2, a first current collector 11 and a first active material layer 12 supported thereon. The first active material layer 12 is formed on both sides of the first current collector 11. However, at one end portion along the longitudinal direction of the first current collector 11, a first exposed portion 11x not having the first active material layer 12 is formed. The first exposed portion 11x is projected from one end face (first end face) of the wound body 100. An exposed portion other than the first exposed portion 11x may also be formed at the first current collector 11.

A first current collecting portion 13 electrically connected to the first current collector 11 is formed at the first end face side of the wound body 100. The first current collecting portion 13 has a porous metal portion PM, and a first current collecting plate 132. The porous metal portion PM fills the gap of the first exposed portion 11x. The contact area between the porous metal portion PM filling the gap and the first exposed portion 11x is inevitably sufficiently large.

FIG. 3 shows a plan view (a) illustrating a configuration of another first electrode 10A and a vertical cross sectional view (b) along line b-b. In the first electrode 10A, the first exposed portion 11x of the first current collector 11 is folded once, providing a folded portion 11y. In the case of the first electrode 10A in which the folded portion 11y is formed, the contact area between the first exposed portion 11x and porous metal portion PM becomes even bigger.

A plurality of projected portions PR are projected from the first current collecting plate 132. The projected portions PR are pressed into the porous metal portion PM. The first current collecting plate 132 is connected to an internal face of a bottom portion of the case 210 through a connection terminal 133. Thus, the case 210 functions as a first terminal.

The second electrode 20 has, as shown in FIG. 4, a second current collector 21 and a second active material layer 22 supported thereon. The second active material layer 22 is formed on both sides of the second current collector 21. However, at one end portion along the longitudinal direction of the second current collector 21, a second exposed portion 21x not having the second active material layer 22 is formed. The second exposed portion 21x is projected from the other end face (second end face) of the wound body 100. An exposed portion other than the second exposed portion 21x may also be formed at the second current collector 21.

A second current collecting portion 23 electrically connected to the second current collector 21 is formed at the second end face side of wound body 100. The second current collecting portion 23 has a porous metal portion PM, and a second current collecting plate 232. In the following, the porous metal portion of the first current collecting portion may be referred to as PM1, and the porous metal portion of the second current collecting portion may be referred to as PM2 to distinguish them.

The porous metal portion PM2 fills the gap of the second exposed portion 21x. The contact area between the porous metal portion PM2 filling the gap and the second exposed portion 21x is inevitably sufficiently large. By forming the folded portion at the second exposed portion 21x, the contact area between the second exposed portion 21x and porous metal portion PM2 becomes even bigger.

A plurality of second projected portions PR are projected from the second current collecting plate 232. The second projected portions PR are pressed into the second porous metal portion PM2. The second current collecting plate 232 is connected to an internal face of the sealing plate 220 through a current collecting lead 25. Thus, the sealing plate 220 functions as a second terminal.

The first and second exposed portions 11x and 21x go through almost no deformation, because they are not excessively loaded from the porous metal portion PM.

For the positive electrode current collector, which is one of the first current collector 11 and second current collector 21, a sheet metal material is used. The sheet metal material may be metal foil, metal porous body, etching metal, etc. Examples of the metal material include aluminum, aluminum alloy, nickel, and titanium. The positive electrode current collector has a thickness of, for example, 10 µm to 100 µm.

For the negative electrode current collector, which is the other of the first current collector 11 and second current collector 21, a sheet metal material is used. The sheet metal material may be metal foil, metal porous body, etching metal, etc. Examples of the metal material include copper, copper alloy, nickel, and stainless steel. The negative electrode current collector has a thickness of, for example, 10 µm to 100 µm.

The positive electrode active material layer, which is one of the first active material layer 12 and second active material layer 22, includes, for example, a positive electrode active material, a conductive material, and a binder. The positive electrode active material layer is produced by, for example, applying a positive electrode mixture slurry containing a positive electrode active material, conductive agent, and binder onto both sides of the positive electrode current collector, drying the applied coating, and then rolling. The positive electrode active material is a material that stores and releases lithium ions. Examples of the positive electrode active material include a lithium-containing transition metal oxide, fluorinated transition metal, polyanion, fluorinated polyanion, and sulfide of transition metals.

The negative electrode active material layer, which is the other of the first active material layer 12 and second active material layer 22, includes, for example, a negative electrode active material, a conductive agent, and a binder. The negative electrode active material layer is produced by, for example, applying a negative electrode mixture slurry containing a negative electrode active material, conductive agent, and binder onto both sides of the negative electrode current collector 21, drying the applied coating, and then rolling. The negative electrode active material is a material that stores and releases lithium ions. Examples of the negative electrode active material include a carbon material, metal compound, alloy, and ceramic material.

The material of the positive electrode current collecting plate, which is one of the first current collecting plate 132 and second current collecting plate 232, is, for example, aluminum, aluminum alloy, titanium, and stainless steel. The material of the positive electrode current collecting plate may be the same as that of the positive electrode current collector 11.

The material of the negative electrode current collecting plate, which is the other of the first current collecting plate 132 and second current collecting plate 232, is, for example, copper, copper alloy, nickel, and stainless steel. The material of the negative electrode current collecting plate may be the same as that of the negative electrode current collector.

For the separator 30, for example, a microporous film, woven cloth, nonwoven fabric, and the like of resin such as polyolefin may be used. The separator has a thickness of, for example, 10 to 300 µm, and preferably 10 to 40 µm.

The non-aqueous electrolyte has lithium ion conductivity, and includes, for example, a lithium salt and a non-aqueous solvent that dissolves the lithium salt.

Positions are adjusted in the wound body 100 such that, as shown in FIG. 5, when wound, the first exposed portion 11x is projected from one end face (first end face) of the wound body 100, and the second exposed portion 21x is projected from the other end face (second end face) of the wound body 100. The separator 30 is wrapped around the outermost periphery of the wound body 100. The outermost periphery of the wound body 100 may be a positive electrode current collector or negative electrode current collector.

To the first exposed portion 11x projected from the first end face, an electrically conductive paste P1 is applied. By solidifying or curing the electrically conductive paste P1, a porous metal portion PM1 composed of an aggregate of a plurality of metal particles is formed. The electrically conductive paste P1 before being solidified or cured has flowability, and for example, due to the surface tension, it wets and spreads to the first exposed portion 11x so as to cover at least a portion of the first end face of the wound body 100.

To the second exposed portion 21x projected from the second end face, an electrically conductive paste P2 is applied. By solidifying or curing the electrically conductive paste P2, a porous metal portion PM2 composed of an aggregate of a plurality of metal particles is formed. The electrically conductive paste P2 before being solidified or cured has flowability, and for example, due to the surface tension, it wets and spreads to the second exposed portion 21x so as to cover at least a portion of the second end face of the wound body 100.

For one of the electrically conductive pastes P1 and P2 applied to the exposed portion of the positive electrode current collector, powder of aluminum, aluminum alloy, etc. is used as the metal particles. For the other of the electrically conductive pastes P1 and P2 applied to the exposed portion of the negative electrode current collector, powder of copper, copper alloy, nickel, nickel alloy, etc. is used as the metal particles. The surface of the metal particles of the electrically conductive pastes P1 and P2 may be coated with another metal.

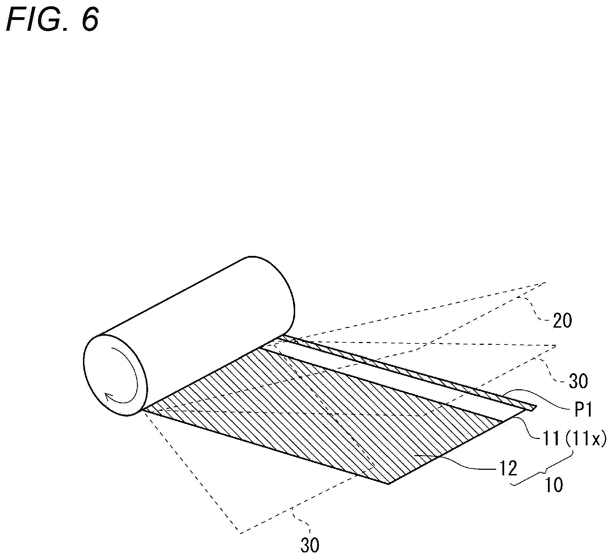

FIG. 6 schematically shows an example of the process in which the wound body 100 is formed. In this example, the electrically conductive paste P1 is applied to the first exposed portion 11x of the first electrode 10 before being wound while winding the first electrode 10 and second electrode 20 with the separator 30 interposed therebetween. The second electrode 20 and separator 30 are shown with broken lines, and the electrically conductive paste P2 may be applied to the second exposed portion 21x of the second electrode 20 before being wound.

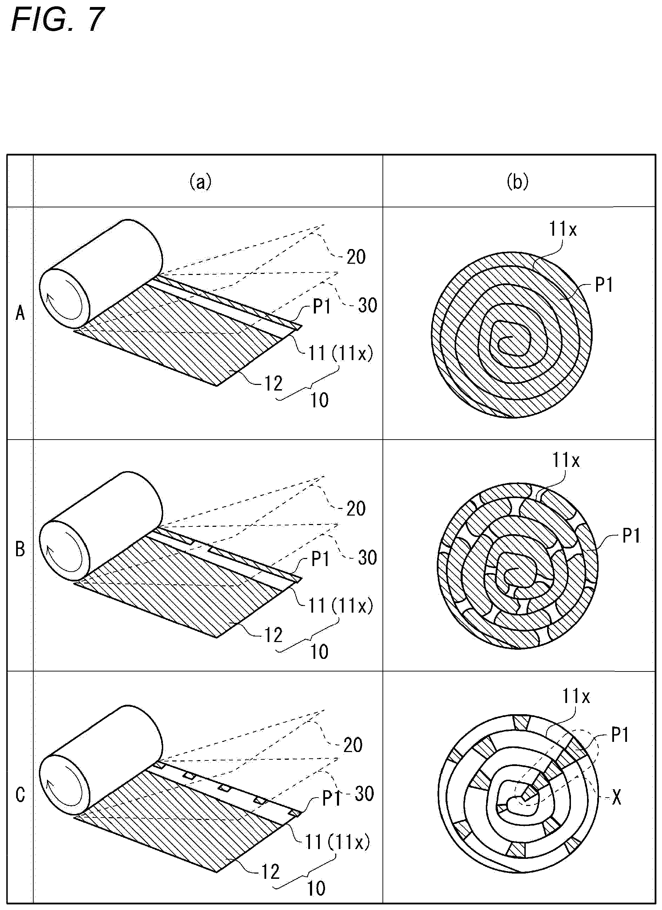

FIG. 7 shows examples of variations of the application pattern of the electrically conductive paste P1 applied to the first exposed portion 11x of the first electrode 10. The variations below may be applied to the electrically conductive paste P2 applied to the second exposed portion 11x of the second electrode 20.

FIG. 7A schematically shows a process (a), in which the electrically conductive paste P1 is applied to the first exposed portion 11x continuously to form the wound body 100, and a state (b) of the first end face of the obtained wound body 100. In the embodiment of FIG. 7A, the electrically conductive paste P1 is applied to the gap of the first exposed portion 11x so as to cover almost all of the first end face (e.g., 90% or more). Therefore, it makes it difficult for sputter or metal contaminants to enter inside the wound body 100 in the welding process thereafter, and a first current collecting portion 13 with even more low resistance is formed.

FIG. 7B schematically shows a process (a), in which the electrically conductive paste P1 is applied intermittently to the first exposed portion 11x to form the wound body 100, and a state (b) of the first end face of the obtained wound body 100. In the embodiment of FIG. 7B, the electrically conductive paste P1 is applied to the gap of the first exposed portion 11x so as to cover, for example, 50% or more of the first end face (e.g., 50% or more and less than 90%). Therefore, it makes it difficult for metal contaminants to enter inside the wound body 100, and the injected non-aqueous electrolyte is sufficiently held.

FIG. 7C schematically shows a process (a), in which the electrically conductive paste P1 is applied to the first exposed portion 11x spottedly with a predetermined space provided therebetween to form the wound body 100, and a state (b) of the first end face of the obtained wound body 100. In the embodiment of FIG. 7C, the electrically conductive paste P1 is applied to the gap of the first exposed portion 11x so as to cover less than 50% of the first end face (e.g., 10% or more and less than 50%). In this case, the injected non-aqueous electrolyte is excellently held. As in the region surrounded by the broken line X, when the electrically conductive paste P1 is disposed along the radial direction (radially) of the wound body 100, an even thicker, and low resistance conductive path is formed.

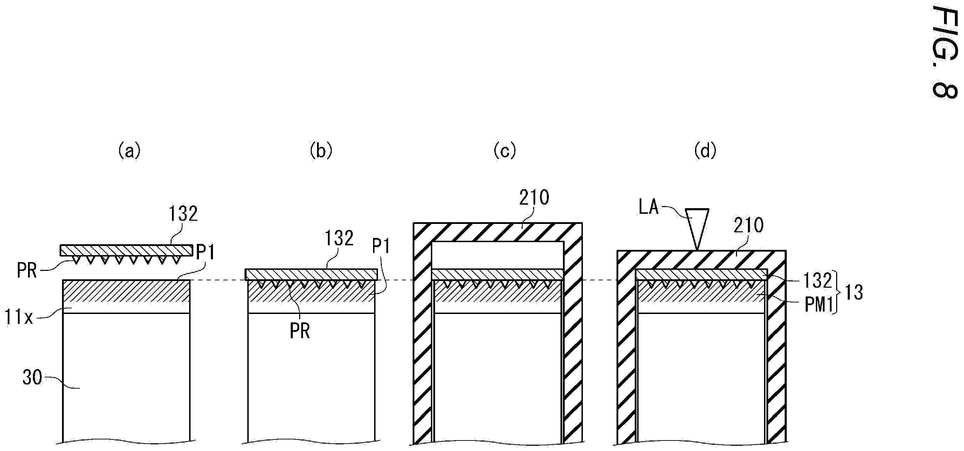

FIG. 8 is a schematic diagram illustrating steps: ((a), (b)), in which the projected portions PR of the first current collecting plate 132 are pressed into the porous metal portion PM1 filling the gap of the first exposed portion 11x, and ((c), (d)), in which, thereafter, the first current collecting plate 132 is welded to a bottom portion of the bottomed case 210. By pressing in the projected portions PR, the first current collecting plate 132 is strongly connected to the porous metal portion PM1, achieving an excellently reliable electric connectivity. The welding step (d) may be performed by a method such as laser welding, in which laser LA is applied from an outer face side of the bottom portion of the case 210.

FIG. 8 shows an example in which the first current collecting portion 13 is connected to the bottom portion of the case 210, and the case 210 also functions as the first terminal, but it is not limited thereto, and the first current collecting portion 13 may be disposed at the opening side of the case 210, and connected to inside the sealing plate 220 through a predetermined current collecting lead. In that case, the second current collecting portion 23 is connected to the bottom portion of the case 210.

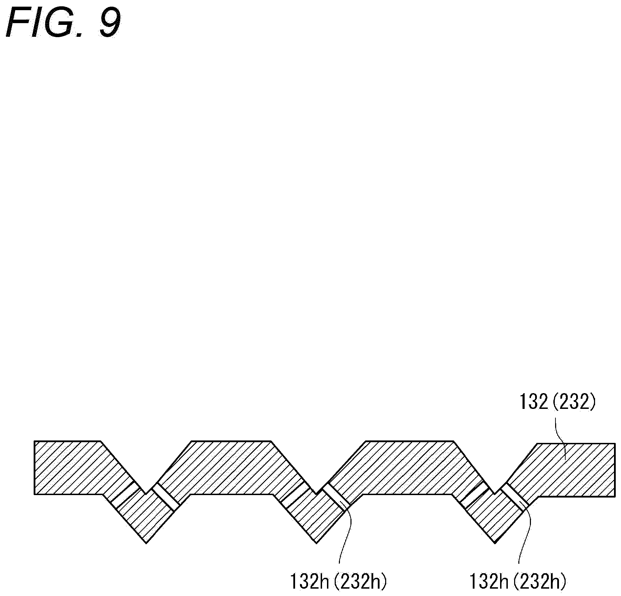

FIG. 9 schematically shows a cross section of an example of the first or second current collecting plates 132 and 232. The portion forming the projected portions PR of the first or second current collecting plates 132 and 232 is provided with through holes 132h (232h) penetrating the current collecting plate. The through holes 132h (232h) work to accelerate flow of the non-aqueous electrolyte. By providing the through holes to the projected portions PR, the non-aqueous electrolyte easily flows inside the porous metal portion PM or more to the wound body 100 side than the porous metal portion PM.

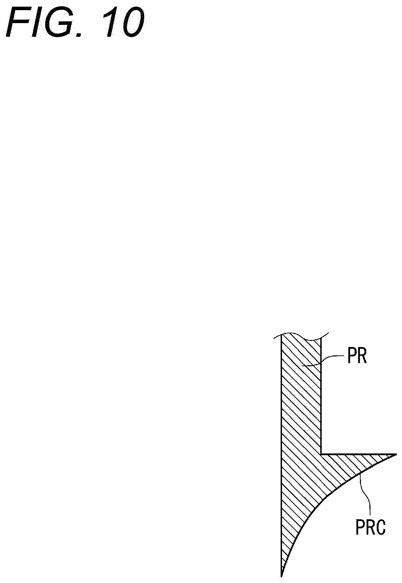

In the figures described, the projected portions are schematically shown as having a cone shape, but, according to the invention, the projected portions have a distal end of a hook. FIG. 10 shows the projected portion PR. The projected portion PR has a distal end of a hook, i.e., an engaging portion PRC. The engaging portion PRC works such that the projected portions PR are not easily pulled out from the porous metal portion PM.

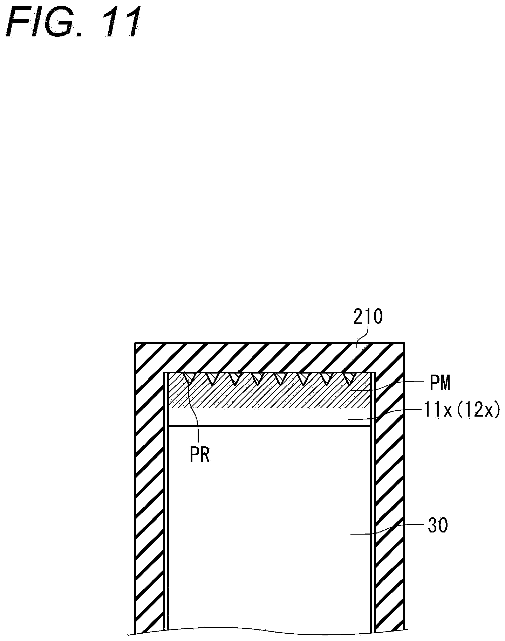

The first or second current collecting plates 132 and 232 are not necessarily essential. FIG. 11 schematically shows a case where the projected portions PR are projected from the bottom portion of the bottomed case 210. When the projected portions PR are formed at the bottom portion of the case 210 as shown, the porous metal portion PM can be directly connected to the bottom portion of the case 210. Thus, the internal space of the case can be efficiently used.

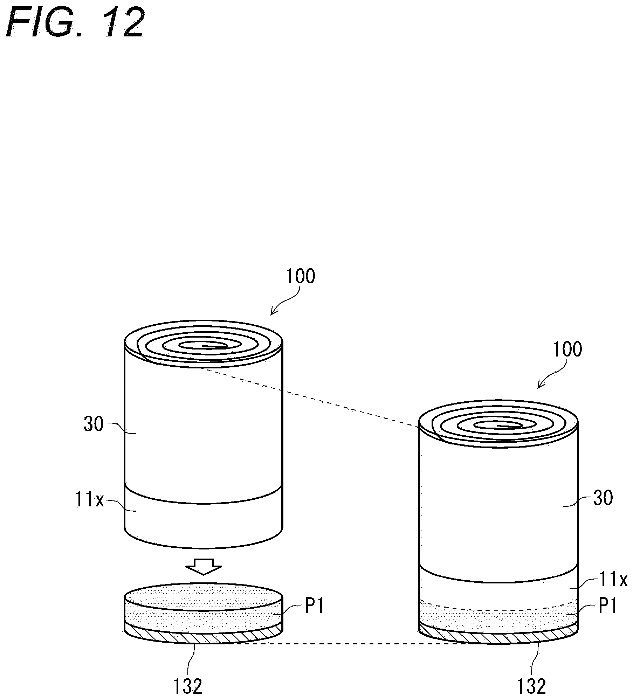

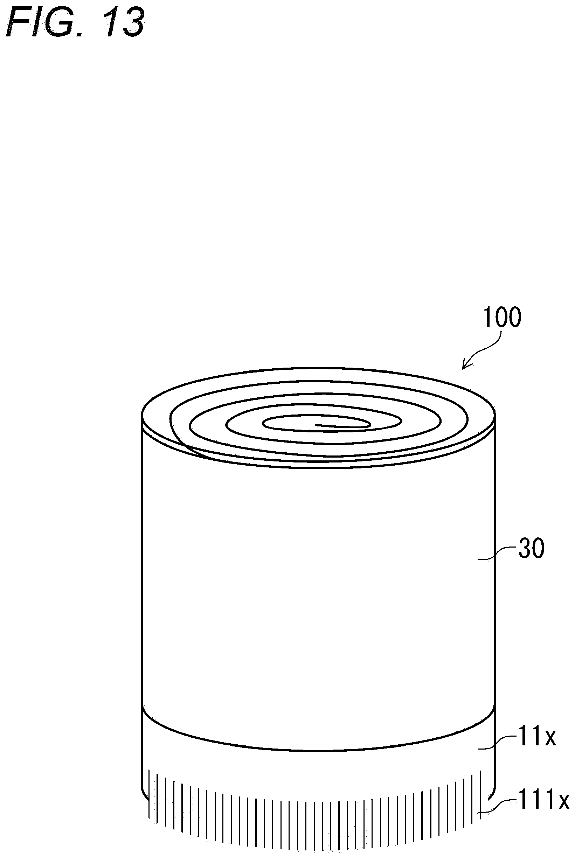

The step of applying the electrically conductive paste P1 or P2 to the first or second exposed portion 11x or 21x can be performed after the wound body is formed. FIG. 12 shows a step of preparing the first current collecting plate 132 having projected portions PM (omitted in FIG. 12), applying the electrically conductive paste P1 to a face of the first current collecting plate 132 where the projected portions PR are projected to form a coating, and thereafter, disposing the first current collecting plate 132 to the first end face of the formed wound body 100. By disposing the end face of the wound body 100 to the coating of the electrically conductive paste P1, the electrically conductive paste P1 having flowability goes into the gap of the first exposed portion 11x by the surface tension. Thus, the first current collecting portion 13 can be formed easily. At that time, as shown in FIG. 13, at least a portion of the first exposed portion 11x may be given a plurality of slits in the width direction of the first current collector 11 to finely split the first exposed portion 11x to form a brush exposed portion 111x. In this manner, the contact area between the electrically conductive paste P1 and first exposed portion 11x greatly increases, and therefore significant decrease in contact resistance can be expected.

### Industrial Applicability

The power storage device of the present disclosure has a small contact resistance, a high output, and is highly reliable, and therefore suitable for, for example, applications in vehicles. Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. The scope of the present invention is defined by the appended claims.

### Description of Reference Numerals

100: wound body
   10, 10A: first electrode
   11: first current collector
   11x: first exposed portion
   111x: brush exposed portion
   11y: folded portion
   12: first active material layer
   13: first current collecting portion
   132: first current collecting plate
   133: connection terminal
   20: second electrode
   21: second current collector
   21x: second exposed portion
   22: second active material layer
   23: second current collecting portion
   232: second current collecting plate
   25: current collecting lead
   30: separator
200: battery (power storage device)
   210: case
   220: sealing plate
   221: gasket
   PM: porous metal portion
   PR: projected portion

## Claims

1. A power storage device (200) comprising:
a first electrode (10) having an elongated sheet first current collector (11), and a first active material layer (12) carried on the first current collector (11),
an elongated sheet second electrode (20),
a separator (30) interposed between the first electrode (10) and the second electrode (20),
a non-aqueous electrolyte, and
a first current collecting portion (13) electrically connected to the first current collector (11), wherein
the first electrode (10), the second electrode (20), and the separator (30) form a columnar wound body (100),
one end portion along a longitudinal direction of the first current collector (11) is a first exposed portion (11x) not having the first active material layer (12) and projected from one end face of the wound body (100),
the first current collecting portion (13) has a porous metal portion (PM), and one or more projected portions (PR) that are pressed into the porous metal portion (PM), and
the porous metal portion (PM) abuts on the first exposed portion (11x),
**characterized in that** the projected portion (PR) has a distal end of a hook, and the first exposed portion (11x) is folded at least once.

2. The power storage device (200) of claim 1, wherein the porous metal portion (PM) is an aggregate of a plurality of metal particles.

3. The power storage device (200) of claim 1 or 2, wherein
the first current collecting portion (13) includes a first current collecting plate, and
the projected portion is projected from the first current collecting plate.

4. The power storage device (200) of claim 3, wherein
the projected portion has a through hole penetrating the first current collecting plate.

5. The power storage device (200) of claim 1 or 2, wherein
the projected portion is projected from a bottom portion of a bottomed case accommodating the first electrode (10), the second electrode (20), the separator (30), and the non-aqueous electrolyte.

6. The power storage device (200) of any one of claims 1 to 5, wherein
at least a portion of the first exposed portion (11x) is finely split by a plurality of slits extending in a transverse direction of the first current collector (11).

7. The power storage device (200) of any one of claims 1 to 6, wherein
the porous metal portion (PM) is formed intermittently in a winding direction of the first exposed portion (11x).

8. The power storage device (200) of claim 7, wherein a plurality of portions of the porous metal portion (PM) are arranged in the winding direction with a space interposed therebetween and at the end face of the wound body (100), some of the plurality of portions are arranged to overlap with each other in a radial direction of the wound body (100).

9. A method for producing a power storage device (200), the method comprising the steps of:
preparing a first electrode (10) having an elongated sheet first current collector (11) and a first active material layer (12) carried on the first current collector (11), wherein one end portion along the longitudinal direction of the first current collector (11) is a first exposed portion (11x) not having the first active material layer (12),
preparing an elongated sheet second electrode (20),
preparing a separator (30) to be interposed between the first electrode (10) and the second electrode (20),
forming a columnar wound body (100) from the first electrode (10), the second electrode (20), and the separator (30) such that the first exposed portion (11x) is projected from one end face of the wound body (100),
applying an electrically conductive paste including metal particles to the first exposed portion (11x), solidifying or curing the electrically conductive paste to form a porous metal portion (PM) filling a gap of the first exposed portion (11x), and
pressing one or more projected portions (PR) into the porous metal portion (PM) to form a first current collecting portion (13),
wherein, before the electrically conductive paste is applied to the one end portion of the first electrode (10), the one end portion is folded at least once, and the projected portion (PR) has a distal end of a hook.

10. The method for producing a power storage device (200) of claim 9, wherein
the step of applying the electrically conductive paste to the first exposed portion (11x) includes while applying the electrically conductive paste to the one end portion of the first electrode (10) before being wound, the first electrode (10) and the second electrode (20) are wound with the separator (30) interposed therebetween.

11. The method for producing a power storage device (200) of claim 9, wherein the step of applying the electrically conductive paste to the first exposed portion (11x) includes preparing a first current collecting plate from which the projected portion is projected, applying the electrically conductive paste to a face of the first current collecting plate from which the projected portion is projected to form a coating, and disposing the first current collecting plate to the one end face of the wound body (100) with the coating interposed therebetween.

## Patentansprüche

1. Energiespeichervorrichtung (200), umfassend:
eine erste Elektrode (10), die einen ersten Stromkollektor (11) in Form einer länglichen Folie und eine erste Aktivmaterialschicht (12), die auf dem ersten Stromkollektor (11) getragen ist, aufweist,
eine zweite Elektrode (20) in Form einer länglichen Folie,
einen Separator (30), der zwischen der ersten Elektrode (10) und der zweiten Elektrode (20) angeordnet ist,
einen nichtwässrigen Elektrolyten, und
einen ersten Stromsammelabschnitt (13), der elektrisch mit dem ersten Stromkollektor (11) verbunden ist, wobei
die erste Elektrode (10), die zweite Elektrode (20) und der Separator (30) einen säulenförmigen Wickelkörper (100) bilden,
ein Endabschnitt entlang einer Längsrichtung des ersten Stromkollektors (11) ein erster freiliegender Abschnitt (11x) ist, der die erste Aktivmaterialschicht (12) nicht aufweist und
von einer Endfläche des Wickelkörpers (100) vorsteht,
der erste Stromsammelabschnitt (13) einen porösen Metallabschnitt (PM) und einen oder mehrere vorstehende Abschnitte (PR), die in den porösen Metallabschnitt (PM) eingedrückt sind, aufweist, und
der poröse Metallabschnitt (PM) an dem ersten freiliegenden Abschnitt (11x) anliegt,
**dadurch gekennzeichnet, dass** der vorstehende Abschnitt (PR) ein distales Ende eines Hakens aufweist, und der erste freiliegende Abschnitt (11x) mindestens einmal gefaltet ist.

2. Energiespeichervorrichtung (200) nach Anspruch 1, wobei der poröse Metallabschnitt (PM) ein Aggregat aus einer Vielzahl von Metallpartikeln ist.

3. Energiespeichervorrichtung (200) nach Anspruch 1 oder 2, wobei
der erste Stromsammelabschnitt (13) eine erste Stromsammelplatte umfasst, und
der vorstehende Abschnitt von der ersten Stromsammelplatte vorsteht.

4. Energiespeichervorrichtung (200) nach Anspruch 3, wobei
der vorstehende Abschnitt ein Durchgangsloch aufweist, das die erste Stromsammelplatte durchdringt.

5. Energiespeichervorrichtung (200) nach Anspruch 1 oder 2, wobei
der vorstehende Abschnitt von einem Bodenabschnitt eines mit einem Boden versehenen Gehäuses vorsteht, das die erste Elektrode (10), die zweite Elektrode (20), den Separator (30) und den nichtwässrigen Elektrolyten aufnimmt.

6. Energiespeichervorrichtung (200) nach einem der Ansprüche 1 bis 5, wobei zumindest ein Teil des ersten freiliegenden Abschnitts (11x) durch eine Vielzahl von Schlitzen, die sich in einer Querrichtung des ersten Stromkollektors (11) erstrecken, fein aufgeteilt ist.

7. Energiespeichervorrichtung (200) nach einem der Ansprüche 1 bis 6, wobei der poröse Metallabschnitt (PM) intermittierend in einer Wickelrichtung des ersten freiliegenden Abschnitts (11x) ausgebildet ist.

8. Energiespeichervorrichtung (200) nach Anspruch 7, wobei eine Vielzahl von Abschnitten des porösen Metallabschnitts (PM) in der Wickelrichtung mit einem dazwischen angeordneten Zwischenraum angeordnet sind und an der Endfläche des Wickelkörpers (100) einige der Vielzahl von Abschnitten so angeordnet sind, dass sie einander in einer radialen Richtung des Wickelkörpers (100) überlappen.

9. Verfahren zur Herstellung einer Energiespeichervorrichtung (200), wobei das Verfahren die folgenden Schritte umfasst:
Bereitstellen einer ersten Elektrode (10), die einen ersten Stromkollektor (11) in Form einer länglichen Folie und eine erste Aktivmaterialschicht (12), die auf dem ersten Stromkollektor (11) getragen ist, aufweist, wobei ein Endabschnitt entlang der Längsrichtung des ersten Stromkollektors (11) ein erster freiliegender Abschnitt (11x) ist, der die erste Aktivmaterialschicht (12) nicht aufweist,
Bereitstellen einer zweiten Elektrode (20) in Form einer länglichen Folie,
Bereitstellen eines Separators (30), der zwischen der ersten Elektrode (10) und der zweiten Elektrode (20) anzuordnen ist,
Bilden eines säulenförmigen Wickelkörpers (100) aus der ersten Elektrode (10), der zweiten Elektrode (20) und dem Separator (30) derart, dass der erste freiliegende Abschnitt (11x) von einer Endfläche des Wickelkörpers (100) vorsteht,
Aufbringen einer elektrisch leitfähigen Paste, die Metallpartikel enthält, auf den ersten freiliegenden Abschnitt (11x), Verfestigen oder Aushärten der elektrisch leitfähigen Paste, um einen porösen Metallabschnitt (PM) zu bilden, der einen Spalt des ersten freiliegenden Abschnitts (11x) ausfüllt, und
Eindrücken eines oder mehrerer vorstehender Abschnitte (PR) in den porösen Metallabschnitt (PM), um einen ersten Stromsammelabschnitt (13) zu bilden,
wobei, bevor die elektrisch leitfähige Paste auf den einen Endabschnitt der ersten Elektrode (10) aufgebracht wird, der eine Endabschnitt mindestens einmal gefaltet wird, und der vorstehende Abschnitt (PR) ein distales Ende eines Hakens aufweist.

10. Verfahren zur Herstellung einer Energiespeichervorrichtung (200) nach Anspruch 9, wobei der Schritt des Aufbringens der elektrisch leitfähigen Paste auf den ersten freiliegenden Abschnitt (11x) umfasst, dass, während die elektrisch leitfähige Paste auf den einen Endabschnitt der ersten Elektrode (10) vor dem Wickeln aufgebracht wird, die erste Elektrode (10) und die zweite Elektrode (20) mit dem dazwischen angeordneten Separator (30) gewickelt werden.

11. Verfahren zur Herstellung einer Energiespeichervorrichtung (200) nach Anspruch 9, wobei der Schritt des Aufbringens der elektrisch leitfähigen Paste auf den ersten freiliegenden Abschnitt (11x) umfasst: Bereitstellen einer ersten Stromsammelplatte, von der der vorstehende Abschnitt vorsteht, Aufbringen der elektrisch leitfähigen Paste auf eine Fläche der ersten Stromsammelplatte, von der der vorstehende Abschnitt vorsteht, um eine Beschichtung zu bilden, und Anordnen der ersten Stromsammelplatte an der einen Endfläche des Wickelkörpers (100) mit der dazwischen angeordneten Beschichtung.

## Revendications

1. Dispositif de stockage d'énergie (200) comprenant :
une première électrode (10) ayant un premier collecteur de courant (11) en feuille allongée, et
une première couche de matériau actif (12) portée sur le premier collecteur de courant (11),
une deuxième électrode (20) en feuille allongée,
un séparateur (30) interposé entre la première électrode (10) et la deuxième électrode (20),
un électrolyte non aqueux, et
une première partie de collecte de courant (13) électriquement connectée au premier collecteur de courant (11), dans lequel
la première électrode (10), la deuxième électrode (20) et le séparateur (30) forment un corps enroulé colonnaire (100),
une partie d'extrémité le long d'une direction longitudinale du premier collecteur de courant (11) est une première partie exposée (11x) ne comportant pas la première couche de matériau actif (12) et faisant saillie depuis une face d'extrémité du corps enroulé (100),
la première partie de collecte de courant (13) a une partie métallique poreuse (PM), et une ou plusieurs parties en saillie (PR) qui sont pressées dans la partie métallique poreuse (PM), et
la partie métallique poreuse (PM) vient en butée contre la première partie exposée (11x),
**caractérisé en ce que** la partie en saillie (PR) a une extrémité distale de crochet, et la première partie exposée (11x) est pliée au moins une fois.

2. Dispositif de stockage d'énergie (200) selon la revendication 1, dans lequel la partie métallique poreuse (PM) est un agrégat d'une pluralité de particules métalliques.

3. Dispositif de stockage d'énergie (200) selon la revendication 1 ou 2, dans lequel
la première partie de collecte de courant (13) comprend une première plaque de collecte de courant, et
la partie en saillie fait saillie depuis la première plaque de collecte de courant.

4. Dispositif de stockage d'énergie (200) selon la revendication 3, dans lequel la partie en saillie a un trou traversant pénétrant la première plaque de collecte de courant.

5. Dispositif de stockage d'énergie (200) selon la revendication 1 ou 2, dans lequel la partie en saillie fait saillie depuis une partie de fond d'un boîtier à fond logeant la première électrode (10), la deuxième électrode (20), le séparateur (30) et l'électrolyte non aqueux.

6. Dispositif de stockage d'énergie (200) selon l'une quelconque des revendications 1 à 5, dans lequel
au moins une partie de la première partie exposée (11x) est finement divisée par une pluralité de fentes s'étendant dans une direction transversale du premier collecteur de courant (11).

7. Dispositif de stockage d'énergie (200) selon l'une quelconque des revendications 1 à 6, dans lequel
la partie métallique poreuse (PM) est formée de manière intermittente dans une direction d'enroulement de la première partie exposée (11x).

8. Dispositif de stockage d'énergie (200) selon la revendication 7, dans lequel une pluralité de portions de la partie métallique poreuse (PM) sont agencées dans la direction d'enroulement avec un espace interposé entre elles et, au niveau de la face d'extrémité du corps enroulé (100), certaines de la pluralité de portions sont agencées pour se chevaucher mutuellement dans une direction radiale du corps enroulé (100).

9. Procédé de production d'un dispositif de stockage d'énergie (200), le procédé comprenant les étapes consistant à :
préparer une première électrode (10) ayant un premier collecteur de courant (11) en feuille allongée et une première couche de matériau actif (12) portée sur le premier collecteur de courant (11), dans lequel une partie d'extrémité le long de la direction longitudinale du premier collecteur de courant (11) est une première partie exposée (11x) ne comportant pas la première couche de matériau actif (12),
préparer une deuxième électrode (20) en feuille allongée,
préparer un séparateur (30) destiné à être interposé entre la première électrode (10) et la deuxième électrode (20),
former un corps enroulé colonnaire (100) à partir de la première électrode (10), de la deuxième électrode (20) et du séparateur (30) de telle sorte que la première partie exposée (11x) fasse saillie depuis une face d'extrémité du corps enroulé (100),
appliquer une pâte électriquement conductrice comprenant des particules métalliques à la première partie exposée (11x), solidifier ou durcir la pâte électriquement conductrice pour former une partie métallique poreuse (PM) remplissant un interstice de la première partie exposée (11x), et
presser une ou plusieurs parties en saillie (PR) dans la partie métallique poreuse (PM) pour former une première partie de collecte de courant (13),
dans lequel, avant que la pâte électriquement conductrice soit appliquée à la partie d'extrémité de la première électrode (10), la partie d'extrémité est pliée au moins une fois, et la partie en saillie (PR) a une extrémité distale de crochet.

10. Procédé de production d'un dispositif de stockage d'énergie (200) selon la revendication 9, dans lequel
l'étape d'application de la pâte électriquement conductrice à la première partie exposée (11x) comprend le fait que, tout en appliquant la pâte électriquement conductrice à la partie d'extrémité de la première électrode (10) avant d'être enroulée, la première électrode (10) et la deuxième électrode (20) sont enroulées avec le séparateur (30) interposé entre elles.

11. Procédé de production d'un dispositif de stockage d'énergie (200) selon la revendication 9, dans lequel l'étape d'application de la pâte électriquement conductrice à la première partie exposée (11x) comprend la préparation d'une première plaque de collecte de courant depuis laquelle la partie en saillie fait saillie, l'application de la pâte électriquement conductrice à une face de la première plaque de collecte de courant depuis laquelle la partie en saillie fait saillie pour former un revêtement, et la disposition de la première plaque de collecte de courant sur la face d'extrémité du corps enroulé (100) avec le revêtement interposé entre eux.
